# EUROPEAN PATENT APPLICATION

(11) **EP 3 648 070 A1**
(43) Date of publication of application: **06.05.2020**
(21) Application number: 19818662.9
(22) Date of filing: 12.06.2019
(51) Int. Cl.: G07F 9/00, G06Q 20/36, G06Q 30/06

(54) **PRODUCT VENDING DEVICE AND PRODUCT VENDING METHOD**

(30) Priority: 14.06.2018 JP 2018113776
(71) Applicant: V-Sync Co., Ltd., Tokyo 104-0045 (JP)
(72) Inventor: IBE Takaya, Tokyo 104-0045 (JP)
(74) Representative: Schlief, Thomas P.
(86) International application number: PCT/JP2019/023320
(87) International publication number: WO 2019/240184

(57) **Abstract**

Provided are a product vending device and a product vending method that make efficient use possible even when vending of a product is not being performed. The present invention comprises: a mining process unit that performs a mining process for establishing transactions of cryptocurrency substituted for legal currency between any devices; and a vending unit that vends products by payment having been performed via legal currency and/or cryptocurrency, wherein this mining process unit performs a mining process when in a state where the vending of products by the vending unit is not being performed, a mining reward obtained by the mining process is stored in the storage unit, and the vending unit enables the vending of products on the basis of vending information relating to vending of products determined in accordance with the mining reward stored in the storage unit.

## Description

### Technical field

The present invention relates to a product selling apparatus and a product selling method.

### Background art

Conventionally, automatic vending machines and unmanned selling systems have been provided, which allow a consumer to purchase a desired product by choosing the product when (at the time) the consumer wants to have that. Likewise, electric business transactions with EC (electric commerce) sites, which have been widely used by the development of web technology in recent years, allow the same thing.

The above-described selling apparatuses have been sophisticated by the development in technology, and therefore have increased the throughput. As a result, it is possible to provide a display style to enhance the willingness of purchase of consumers as a sales technique. In the meantime, it is possible to minimize wasted power consumption by using power-saving technology in view of environment conservation.

That is, when a selling apparatus does not sell any product to consumers, or when the product is not likely to be sold based on the sales trend and so forth, energy conservation is promoted in the selling apparatus.

### Citation list

### Patent Literature

PTL1: Japanese Patent Application Laid-Open No.2014-232381

### Summary of Invention

### Technical Problem

The selling apparatus operates with minimum power when the selling apparatus does not sell any product to consumers. At this time, therefore it is conceivable that the selling apparatus has more than enough capacity (redundant capability, and overengineering).

Patent Literature 1 discloses that a detection unit is configured to be able to detect a person approaching a vending machine, and when the detection unit detects the person approaching the vending machine, presentation information is outputted to the outside. With this related technology described in Patent Literature 1, by outputting the presentation information to the outside when the detection unit detects the person approaching the vending machine, it is ensured that the presentation information can be advertised, and it is possible to prevent unnecessary output of the presentation information when there is no person around the vending machine. As a result, it is possible to promote energy conservation.

However, the related technology merely eliminates wasteful energy use when selling is not done.

### Solution to Problem

It is therefore an object of the present invention to provide a product selling apparatus and a product selling method capable of effectively being used even when the product selling apparatus does not sell any product.

According to one aspect of the present invention, a product selling apparatus includes: a mining process unit configured to perform a mining process to close a transaction in cryptocurrency as substitute for legal currency between any apparatuses; and a selling unit configured to sell a product by making settlement in at least one of the legal currency and the cryptocurrency. The mining process unit performs the mining process when the selling unit does not sell the product. The mining process unit stores a mining reward obtained by the mining process in a storage unit. The selling unit can sell the product, based on product sales information about selling of the product determined depending on the mining reward stored in the storage unit.

When a condition to determine the product sales information is met, a discount amount for the mining reward stored in the storage unit is calculated, and the selling unit sells the product at a discounted price obtained by subtracting the discount amount from a sales price of the product.

The discount amount is determined based on the mining reward stored in the storage unit for one or more products designated in advance.

A product selling method performed in an apparatus including: a mining process unit configured to perform a mining process to close a transaction in cryptocurrency as substitute for legal currency between any apparatuses; and a selling unit configured to sell a product by making settlement in at least one of the legal currency and the cryptocurrency. The product selling method comprises: performing the mining process by the mining process unit when the selling unit does not sell the product; storing a mining reward obtained by the mining process in a storage unit; and selling the product by the selling unit, based on product sales information about selling of the product determined depending on the mining reward stored in the storage unit.

According to the present invention, it is possible to provide a product selling apparatus and a product selling method capable of being effectively used when the product selling apparatus does not sell any product.

### Brief Description of Drawings

Fig. 1 illustrates the entire configuration of a product selling system including product selling apparatuses according to an embodiment of the present invention;
Fig. 2 is a functional block diagram illustrating functions of a vending machine as an example of the product selling apparatuses according to the embodiment of the present invention;
Fig. 3 is a sequence diagram illustrating process transitions in the product selling system including the product selling apparatuses according to the embodiment of the present invention;
Fig. 4 is a flowchart illustrating a product sales control process performed by the vending machine as an example of the product selling apparatuses according to the embodiment of the present invention;
Fig. 5 is a flowchart illustrating a product sales process performed by the vending machine as an example of the product selling apparatuses according to the embodiment of the present invention;
Fig. 6 is a flowchart illustrating a mining control process performed in the vending machine as an example of the product selling apparatuses according to the embodiment of the present invention;
Fig. 7 is a flowchart illustrating a product sales information determination process performed by the vending machine as an example of the product selling apparatuses according to the embodiment of the present invention; and
Fig. 8 illustrates a discount determination table used in the vending machine as an example of the product selling apparatuses according to the embodiment of the present invention.

### Description of Embodiments

Hereinafter, a product selling apparatus and a product selling method according to an embodiment of the present invention will be described in detail, with reference to the accompanying drawings.

### <Embodiment>

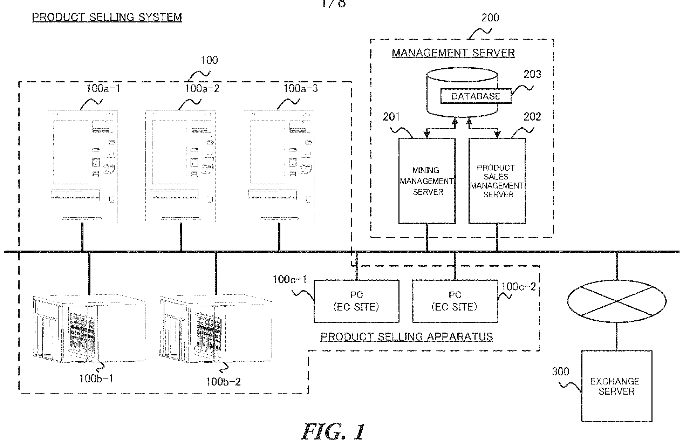

Fig. 1 illustrates the entire configuration of a product selling system including product selling apparatuses according to an embodiment of the present invention.

In Fig. 1, the product selling system includes vending machines 100a, unmanned store systems 100b, and user terminals (EC sites) 100c, each of which is an example of product selling apparatus 100. In addition, a mining management server 201, a product sales management server 202, and a database 203 ("hereinafter collectively referred to as "management server") are connected to communicate with the product selling apparatuses 100 via communication paths. The communication path is a wired or wireless communication path, and connects each node to realize a secure network (internal network).

In addition to the internal network of this product selling system, an external network different from the internal network is provided. At least an exchange server 300 configured to make a transaction in cryptocurrency (crypto assets) described later is connected to the external network. Each of the nodes of the product selling system can communicate with the exchange server 300 each other.

Fig. 1 illustrates three vending machines 100a (a first vending machine 100a-1, a second vending machine 100a-2, and a third vending machine 100a-3), two unmanned store systems 100b (a first unmanned store system 100b-1, and a second unmanned store system 100b-2) and two user terminals 100c (a first user terminal 100c-1, and a second user terminal 100c-2), each of which is an example of product selling apparatus 100. These product selling apparatuses 100 can be disposed in various locations and form the nodes on the internal network.

The vending machine 100a is an example of product selling apparatus 100, which can sell one or more kinds of products and is configured to sell or provide a product to a consumer in exchange for the payment for the product. Also the unmanned store system 100b is an example of product selling apparatus 100, which is larger in scale than the vending machine 100a and configured to sell or provide a product to a consumer in exchange for the payment for the product.

The user terminal 100c allows a consumer or user to use an EC (e-commerce) site, which is a computer configured to allow the consumer or user to buy and sell products, make payment and enjoy service on the EC site. The user terminal 100c is also an example of product selling apparatus 100. The product purchased from the EC site is provided immediately or later after the settlement is completed. Here, products provided by the product selling apparatus 100 include not only goods but also information or service.

For any of the above-described product selling apparatuses 100, the amount of sales (sales value) is set to a product to be sold. The product selling apparatus 100 sells the product in exchange for the payment for the amount of sales at the sales price. The product selling apparatus 100 has an operation interface configured to allow the operation to select products and the operation for payment, a dispenser mechanism to dispense a product to a consumer, and a settlement mechanism to allow the settlement of the purchase of the product.

Upon receiving the operation to select the product or the operation for payment by the consumer via the operation interface, the product selling apparatus 100 performs a series of sales processes including completing the settlement of the purchase of the product by the settlement mechanism, and dispensing the product by the dispensing mechanism. By this means, the product selling apparatus 100 stores "sold product information" about the product sold to the consumer.

This "sold product information" includes the kind, the quantity, the settlement method, and the settlement amount (sales value) of the products sold to the consumer, and is sent to the product sales management server 202. Here, when the settlement method is designated as "in cryptocurrency" described later, the sold product information contains identification information of the consumer identified for the settlement in the cryptocurrency. That is, when the settlement in cryptocurrency is made, the product selling apparatus 100 stores the product sales information for each consumer.

In addition, "sales price" means the amount of money paid from the consumer who has purchased the product to the product selling apparatus 100 as a seller. From the position of the purchaser, "sales price" means the purchase price to purchase the product, and, on the other hand, from the position of the seller, "sales price" means the proceeds from the sale of the product.

The sales price can be paid by "value medium used for the settlement to purchase the product" in the product selling apparatus 100. This value medium includes legal currency such as hard currency and paper currency, and cryptocurrency which is different from the legal currency and can be used for the settlement in substitution for the legal currency. The cryptocurrency may be referred to as "digital currency" and "virtual currency."

That is, the settlement mechanism of the product selling apparatus 100 allows the settlement by using one or more kinds of value media selected by the consumer. That is, the settlement can be made by only legal currency, only cryptocurrency, and a combination of legal currency and cryptocurrency.

The legal currency is generally defined as currency which is legally effective to be used as means for liquidation of debts, and managed by the central bank in each of the countries or regions. In addition to the hard currency and paper currency, the legal currency includes electronic money as electronic data of the currency. On the other hand, the cryptocurrency is managed by a regime different from the legal currency. To be more specific, for the cryptocurrency, an electronic ledger (also referred to as "transaction ledger" or "block") including transaction data about the purchase and sale of the products arranged in chronological order is decentrally managed on the network.

In this way, the product selling apparatus 100 can sell products by using the legal currency and the cryptocurrency.

In particular, for the settlement in the cryptocurrency, a reader (identification unit) configured to read a consumer ID for identifying the consumer is provided on the operation interface of the product selling apparatus 100. The product selling apparatus 100 reads the consumer ID from a terminal operated by the consumer or a card by using the reader, and verifies the consumer. Consequently, the settlement is made by using the cryptocurrency associated with the consumer ID. This reader is realized by a detector 101 described later.

The mining management server 201 is configured to manage information about a mining process performed in the product selling apparatus 100 as described later. The mining management server 201 may periodically manage the information about a mining reward of the mining process performed in the product selling apparatus 100 on the database 203. Further details will be described later.

The product sales management server 202 is configured to manage product sales information for each of the product selling apparatuses 100. The product sales management server 202 can manage the inventory of each product in the product selling apparatus 100 based on "sold product information" received from each of the product selling apparatuses 100, and also manage the sale for each consumer.

A process of inventory management includes calculating the kinds and the quantity of products required, in consideration of the attributes of the products, the location of the product selling apparatus 100, the selling season, and environmental information and so forth, and consequently allows the replenishment of the products in the product selling apparatus 100 at the right time. In addition, a process of sales management includes managing the sales history of each consumer, based on the information on the product sold to the consumer who has paid in cryptocurrency, which is contained in the sold product information received from each of the product selling apparatuses 100.

To be more specific, each of the product selling apparatuses 100 performs the process of sales management to identify the consumer to make the settlement in cryptocurrency, and manages the information on the product sold to the consumer (the kind of the product and the sales price" and the information on the account of the consumer from which the cryptocurrency is withdrawn (equivalent to "wallet" described later). By this means, the product sales management server 202 can manage the sales history for each consumer, so that it is possible to manage the kind and the price of the product sold to the consumer, the sales amount for a certain period of time, and the total sales amount.

The exchange server 300 manages a wallet of the account opened by the consumer, as a function to manage the cryptocurrency, and manages a predetermined amount of cryptocurrency registered (deposited) in the wallet. The predetermined amount of money managed in the wallet is the upper limit of the amount of cryptocurrency available.

In addition, the exchange server 300 can exchange the legal currency for the cryptocurrency; transmit the cryptocurrency to others; and receive the cryptocurrency from others. The above-described exchange of the legal currency for the cryptocurrency is an exchange transaction at a fluctuating exchange rate (transaction rate) between the exchange server 300 and the consumer. Meanwhile, the remittance of the cryptocurrency to others and the receipt of the cryptocurrency from others are transactions between consumers as individuals. The exchange transaction and the transaction between individuals will be collectively referred to as "transaction."

The transaction data about the purchase and sale of the product is validated and approved, so that the transaction can be closed. A process to close the transaction is referred to as a transaction control process (hereinafter "mining process"). To be more specific, predetermined arithmetic processing is performed based on the transaction data, and a calculated value is outputted, and then, the transaction data is linked to the existing electronic ledger in chronological order, so that it is possible to close the transaction. This transaction is performed by a device with a mining function (hereinafter referred to as "miner").

That is, when the transaction with the transaction data is closed by a mining process performed by the miner, the exchange server 300 performs "exchange of the legal currency for the cryptocurrency", "remittance of the cryptocurrency to others" and "receipt of the cryptocurrency from others."

In this case, the miner which has closed the transaction receives a predetermined transaction reward in cryptocurrency (hereinafter referred to as "mining reward"). There are plurality of miners on the network (not shown), and each of the miners competes in the mining process with each other.

Hereinafter, a transaction of the product selling apparatus 100 to sell products by using the cryptocurrency will be described. Here, a process of making a product sales transaction by using the cryptocurrency is performed in the same way as before, and therefore the description will be omitted.

While a predetermined amount of cryptocurrency is registered or deposited in the wallet in the exchange server 300, which is a function to manage the cryptocurrency, in order to purchase a product, the consumer operates the operation interface to select the intended product and designates a value medium for the settlement method.

Then, when the product to be purchased by the consumer is selected, and the cryptocurrency is designated as the value medium for the settlement method, the product selling apparatus 100 requests to read the consumer ID to identify the consumer. Upon reading the consumer ID, the product selling apparatus 100 validates the consumer and the predetermined amount of money in the wallet of the consumer by using a password and so forth. After validating the consumer, the product selling apparatus 100 confirms that the predetermined amount of money is equal to or greater than the sales price, and then opens the transaction data to purchase the product on the network to start a transaction. By this means, all of miners on the network including the internal network and the external network can refer to the transaction data.

Then, each of the miners performs a mining process to close the transaction with the transaction data. When any of the miners completes the mining process, the product selling apparatus 100 receives a notice of the completion indicating that the transaction is closed, from the miner. Here, by the close of the transaction, the cryptocurrency corresponding to the sales price is subtracted from the wallet of the consumer.

After the settlement of the purchase of the product is completed by the settlement mechanism, the product selling apparatus 100 causes the dispenser mechanism to dispense the selected product. Then, the product selling apparatus 100 stores the information about the settlement in association with the product sold to the consumer.

As described above, the product selling apparatus 100 allows the settlement in not only legal currency but also cryptocurrency.

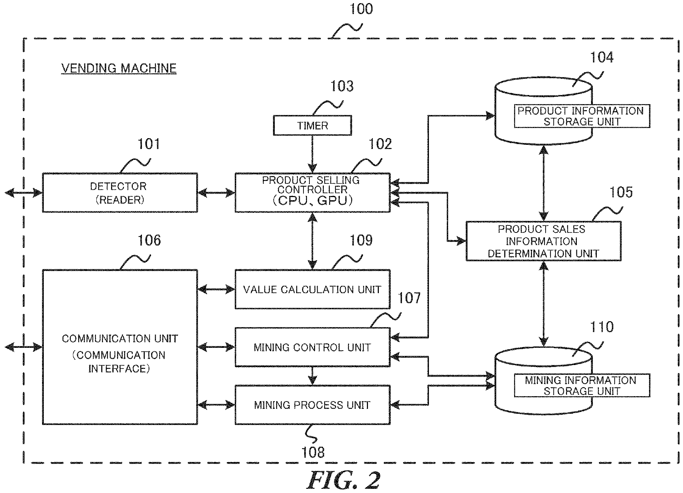

Fig. 2 is a functional block diagram illustrating functions of a vending machine as an example of the product selling apparatuses according to the embodiment of the present invention.

In Fig. 2, the vending machine according to the present invention includes a detector 101, a product selling controller 102, a timer 103, a sold product information storage unit 104, a product sales information determination unit 105, a communication unit 106, a mining control unit 107, a mining unit 108, a value calculation unit 109, and a mining information storage unit 110.

In order to purchase a product, the consumer selects the intended product and selects the value medium for the settlement method. Upon detecting that the value medium is selected, the detector 101 informs the product selling controller 102 that the value medium is selected.

The product selling controller 102 is also referred to as "selling unit" and configured to perform a process of controlling the sale of a product (hereinafter referred to as "product sales control process").

In addition, the product selling controller 102 manages the selling state of the product. The selling state includes "selling mode" in which the product selling apparatus 100 can sell the product as described above, and "waiting mode" which is different from the selling mode. "Selling mode" is started from performing a process of preparation for sales, for example, a process of switching the power mode from an energy saving mode to a normal power mode, because it is determined that a sales starting condition is met, until a predetermined period of time for which any product is not sold has elapsed after the sales is completed. On the other hand, "waiting mode" is not in the condition of "selling mode", and therefore it is not possible to sell a product in the waiting mode.

The sales starting condition is met if an operation or action indicating the purchase intention of the consumer or purchaser is recognized. For example, the sales starting condition involves depositing the legal currency, accepting an operation to select the product, and reading the consumer ID for use of the cryptocurrency.

The sold product information storage unit 104 stores information about the products that can be sold (the kind, the quantity and the amount of sales (sales value) of the products), information about the products sold to the consumer (the kind and the quantity of the products), and settlement information (the kind of value medium, the sales price, and the date and time). In addition, the sold product information storage unit 104 functions as "sales price storage unit" to store the exchange rate described later.

The amount of sales (sales value) is set for each value medium. That is, a legal currency sales price is set for the legal currency, and a cryptocurrency sales price is set for the cryptocurrency. The legal currency sales price and the cryptocurrency sales price correspond to one another, and are determined based on a predetermined exchange rate stored in the sold product information storage unit 104. Although being able to be used for the settlement of the product, the legal currency sales price is mainly used as information displayed on a screen presenting the sales price to the consumer. Actually, the cryptocurrency sales price is used as the sales price for the settlement. Hereinafter, the sales price will be described as the cryptocurrency sales price unless otherwise noted.

The communication unit 106 is a communication interface configured to communicate with an external device or system.

The value calculation unit 109 calculates the value of the cryptocurrency for the legal currency, or the value of the legal currency for the cryptocurrency by using the exchange rate used to exchange the legal currency for the cryptocurrency.

When the timer 103 measures a predetermined period of time such as one second, one minute, and one hour, the product selling controller 102 to request the value calculation unit 109 to acquire the exchange rate as an acquisition unit. In response to the request, the value calculation unit 109 acquires the exchange rate at the time of the request, from a management device (exchange rate management device) including the exchange server 300 shown in Fig. 1 and other devices (not shown) and configured to manage the exchange rate used to exchange the legal currency for the cryptocurrency, via the communication unit 106, and responds to the product selling controller 102.

By this means, the product selling controller 102 updates the predetermined exchange rate stored in the sold product information storage unit 104 to the acquired exchange rate. The predetermined exchange rate stored in the sold product information storage unit 104 is updated every a predetermined period of time such as one second, one minute, and one hour.

The mining unit 108 is configured to realize the mining function for closing transactions such as "exchange of the legal currency for the cryptocurrency", "remittance of the cryptocurrency to others" and "receipt of the cryptocurrency from others", in such a way that the mining unit 108 performs a process of closing the transaction with the transaction data about the sale and purchase of the product by validating and approving the transaction data (mining process). That is, the vending machine is not only a product selling apparatus, but also a miner having the above-described mining function.

That is, the vending machine performs the mining process during the transaction such as "exchange of the legal currency for the cryptocurrency", "remittance of the cryptocurrency to others" and "receipt of the cryptocurrency from others", and consequently can receive the mining reward for the close of the transaction.

The state of the mining process performed by the mining unit 108 is managed by the mining control unit 107. Moreover, the mining control unit 107 manages the selling state ("selling mode" or "waiting mode") of the product of the product selling controller 102.

Upon detecting the start of a transaction without regard to the external network and the internal network, the mining control unit 107 checks the selling state of the product selling controller 102, and, when the selling state is "waiting mode", the mining control unit 107 requests the mining unit 108 to perform a mining process.

By this means, the mining unit 108 performs the mining process for the detected transaction. In this mining process, predetermined arithmetic processing is performed based on the transaction data, and a calculated value is outputted, and then, the transaction data is linked to the existing electronic ledger in chronological order, so that it is possible to close the transaction. At this time, the vending machine (product selling apparatus 100) receives "mining reward" for the transaction. In other words, the vending machine (product selling apparatus 100) possesses a right to receive "mining reward" for the transaction.

When the mining control unit 107 receives a mining completion notice from a miner different from the mining unit 108 during the mining process performed by the mining unit 108, the vending machine immediately stops the mining unit 108 from performing the mining process. This case indicates that the transaction is closed by the mining process performed by the miner different from the mining unit 108, and therefore the vending machine (product selling apparatus 100 fails to close the transaction.

Then, the mining control unit 107 causes the mining information storage unit 110 to store "mining information" indicating the result of the mining process, and "mining reward" received via the communication unit 106 when the transaction is closed by the mining process.

In this way, the vending machine can store the mining reward resulting from the mining process performed by the mining unit 108.

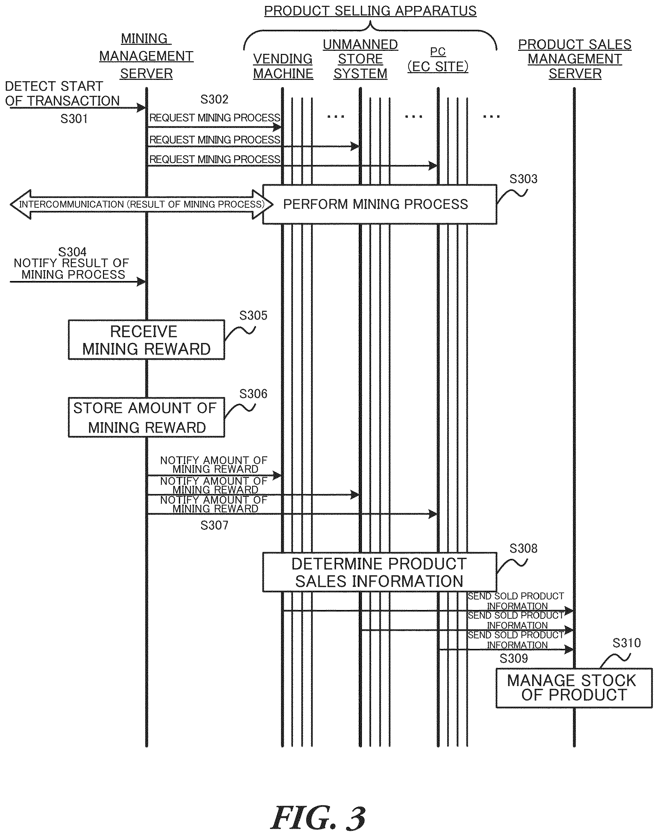

In addition, the result of the mining process, and the mining reward received via the communication unit 106 when the transaction is closed by the mining process may be stored in the database 203 via the mining management server 201. Here, the mining management server 201 may perform the mining control process to operate the product selling apparatuses 100 together to decentrally perform a single mining process (see Fig. 3).

Next, the product selling controller 102 performs a process of determining product sales information (herein after "product sales information determination process").

When detecting that the condition to determine the product sales information (hereinafter "determination condition") is met, the product selling controller 102 requests the product sales information determination unit 105 to determine the product sales information.

The determination condition is met: 1) when the product selling controller 102 detects that the timer 103 measures the predetermined period of time (time) and date; 2) when the mining control unit 107 detects that the mining reward stored in the mining information storage unit 110 is accumulated in an amount equal to or greater than a predetermined amount, and informs the product selling controller 102 of that; or 3) the product selling controller 102 detects that the mining reward stored in the mining information storage unit 110 is increased to an amount equal to or greater than a predetermined amount during a given period of time.

Upon accepting the determination request, the product sales information determination unit 105 determines the product sales information based on the mining reward stored in the mining information storage unit 110.

That is, the vending machine can sell the product based on the product sales information determined by the product sales information determination unit 105.

This product sales information contains at least the kind of the product and the sales price for the kind of the product, and also may contain information about the quantity of the products to be sold at that price.

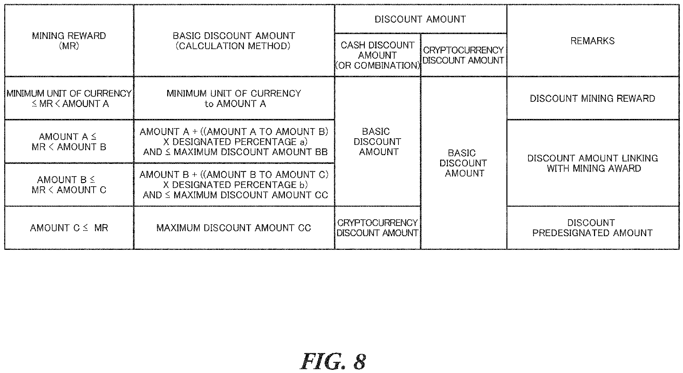

When the determination condition is met, the product sales information unit 105 specifies the mining reward for the achievement of the mining process during a predetermined period of time such as one week, one month, and three months, and calculates a discount amount of the product for the mining reward, with reference to a discount determination table as illustrated in Fig. 8. Then, the product sales information determination unit 105 calculates a discounted sales price obtained by subtracting the calculated discount price from the sales amount of the product (equivalent to the above-described "cryptocurrency sales price").

The discounted sales price is the sales price according to the product sales information.

By this means, the vending machine can sell each product based on the product sales information including the product sales price which is a discounted sales price obtained by subtracting the discount amount for the mining reward from the sales amount of the product. Here, the quantity of products to be sold at the discounted sales price may be arbitrarily determined.

As described above, when the determination condition is met, the product sales information determination unit 105 determines the kind of the product and the sales price for the kind of the product. However, this is by no means limiting, and a cash back process (rebate process) may be performed instead of the determination process performed by the product sales information determination unit 105.

That is, in the latter case, the product is not sold at the discounted sales price at the time of sale, which is different from the former case where the product is sold at the discounted sales price. To be more specific, in the latter case, the product is sold at a substantially discounted price by returning "discount amount for the mining reward" calculated by the product sales information determination unit 105 or an amount equivalent to the discount amount each time or collectively to the consumer at a later time.

Next, settlement in the product sales control process performed by the product selling controller 102 will be described. In the product sales control process, the settlement is made at the cryptocurrency sales price based on the product sales information. The cryptocurrency sales price is the proper sales price (without discount) or the discounted sales price.

This settlement is made only by the cryptocurrency whether the consumer makes payment by the legal currency or the cryptocurrency.

For the settlement in the product sales control process, the product selling controller 102 includes a value exchange unit configured to be able to exchange the legal currency for the cryptocurrency based on the exchange rate stored in the sold product information storage unit 104, and a calculation unit configured to calculate the remaining amount of the cryptocurrency after the payment for the purchase.

The payment for purchase by the consumer includes 1) payment only in legal currency, 2) payment only in cryptocurrency, and 3) payment by a combination of legal currency and cryptocurrency.

In addition, a rebate method to return the remaining amount to the consumer after the purchase includes "rebate only in legal currency", and "rebate only in cryptocurrency."

In the case of 1) payment only in legal currency, the product selling controller 102 causes the value exchange unit to exchange the received legal currency for the cryptocurrency. When the exchanged cryptocurrency meets the cryptocurrency sales price of the selected product, the product selling controller 102 causes the calculation unit to subtract the cryptocurrency sales price from the received legal currency and therefore to calculate the remaining amount of the cryptocurrency.

Then, when the rebate only in legal currency is designated as the rebate method to return the remaining amount to the consumer, the product selling controller 102 exchanges the cryptocurrency for the legal currency by using the exchange rate at which the legal currency is exchanged for the cryptocurrency to return the exchanged legal currency to the consumer.

That is, even though the exchange rate at the time of the payment is the same as the exchange rate at the time of the rebate, and the settlement has been made by cryptocurrency, the rebate is made in the same way as the legal currency.

In addition, when the rebate only in cryptocurrency is designated as the rebate method to return the remaining amount to the consumer, the product selling controller 102 starts a transaction to remit the remaining amount of the cryptocurrency to the wallet corresponding to the consumer ID, and therefore to make rebate. That is, the difference between the legal currency received at the selling of the product and the cryptocurrency sales price is exchanged for the cryptocurrency.

Next, in the case of 2) payment only in cryptocurrency, the product selling controller 102 reads the consumer ID, accepts the designation of the amount of the cryptocurrency used to the payment for the purchase, and starts a transaction to receive the amount of money at the cryptocurrency sales price of the selected product to receive a payment. In addition, the calculation unit calculates the cryptocurrency sales price of the product, and the remaining amount of the cryptocurrency obtained by subtracting the cryptocurrency sales price of the product from the received legal.

When the rebate only in legal currency is designated as the rebate method to return the remaining amount to the consumer, the product selling controller 102 exchanges the remaining amount of the cryptocurrency for the legal currency by using the exchange rate at which the legal currency is exchanged for the cryptocurrency by the value exchange unit, and therefore to return the exchanged legal currency to the consumer.

That is, the difference between the amount of the cryptocurrency designated at the selling of the product and the cryptocurrency sales price of the product is returned in legal currency, and therefore the cryptocurrency is exchanged for the legal currency based on the selling of the product.

On the other hand, when the rebate only in cryptocurrency is designated as the rebate method to return the remaining amount to the consumer, the product selling controller 102 starts a transaction to accept the amount of money at the cryptocurrency sales price of the product even though the amount of money in cryptocurrency designated by the consumer for the payment of the product is higher than the sales price of the selected product in cryptocurrency, and receives a payment.

Then, in the case of 3) payment by a combination of legal currency and cryptocurrency, the product selling controller 102 causes the value exchange unit to exchange the received legal currency for the cryptocurrency, reads the consumer ID to accept the designation of the amount in cryptocurrency used for the payment for the purchase, and starts a transaction to receive the designated amount of the cryptocurrency, and consequently receives a payment. Then, the product selling controller 102 sums the cryptocurrency and calculates the total amount of the cryptocurrency. Then, when the total amount meets the cryptocurrency sales price of the selected product, the calculation unit subtracts the cryptocurrency sales price of the product from the total amount of the cryptocurrency.

Then, when the rebate only in legal currency is designated as the rebate method to return the remaining amount to the consumer, the product selling controller 102 exchanges the remaining amount of the cryptocurrency for the legal currency by using the exchange rate at which the legal currency is exchanged for the cryptocurrency to return the exchanged legal currency to the consumer.

That is, although depending on the amount of the cryptocurrency used for the payment of the purchase, the remaining amount of the cryptocurrency is returned as the legal currency, and therefore the cryptocurrency is exchanged for the legal currency based on the selling of the product.

On the other hand, when the rebate only in cryptocurrency is designated as the rebate method to return the remaining amount to the consumer, the product selling controller 102 starts a transaction to remit the remaining amount of the cryptocurrency to the wallet corresponding to the consumer ID, and therefore to make rebate. That is, although depending on the amount of the legal currency used for the payment of the purchase, the remaining amount of the legal currency is returned as the cryptocurrency, and therefore the legal currency is exchanged for the cryptocurrency based on the selling of the product.

After the product has been sold as described above, the vending machine sends "sold product information" to the product sales management server 202. As described above, this sold product information contains the kind, the quantity, the settlement method, the settlement price (sales price) of the products sold to the consumer, and the identification information of the consumer who is identified for the settlement in cryptocurrency.

As a result, the vending machine can sell products based on the product sales information including the sales price which is the discounted sales price obtained by subtracting the discount amount for the mining reward from the amount of sales of the product.

In addition, as described above, the product selling controller 102 can perform a cash back process (rebate process) instead of the product sales information determination process performed by the product sales information determination unit 105. Hereinafter, the cash back process (rebate process) will be described. Here, one of the product sales information determination process and the cash back process is performed based on setting information indicating whether the product sales information determination process or the cash back process is performed, or with/without cash back in the product sales information determination process.

That is, even though the determination condition is met, the above-described product sales information determination process is not performed in the cash back process, and therefore a discounted sales price is not applied but the proper sales price (without discount) is applied in the cash back process.

That is, by changing the setting of the setting information, it is possible to perform one of 1) the product sales information determination process for allowing the product to be sold at the discounted sales price obtained by subtracting the amount for the mining reward from the proper price; and 2) the cash back process for returning part of the paid amount of money at the proper price without discount to the consumer later.

When a settlement in cryptocurrency is made, the vending machine performs the cash back process for returning part of the paid amount of money to the consumer by informing the product sales management server 202 of the identification information of the consumer identified for the settlement in the cryptocurrency and the setting information, and receiving an instruction on a cash back to the consumer from the product sales management server 202. Here, when the setting information is managed by the product sales management server 202, the product sales management server 202 does not necessarily need to receive the setting information.

In this case, upon receiving the identification information of the consumer identified for the settlement in the cryptocurrency and the setting information, the product sales management server 202 performs the following "cash back determination."

For the cash back determination, first, upon receiving the identification information of the consumer identified for the settlement in cryptocurrency and the setting information, the product sales management server 202 calculates the sales amount for a certain period (including the entire period), based on the product sales information for the identification information of the consumer stored in the database 203.

When determining that the sales amount for the certain period is equal to or greater than a predetermined amount, the product sales management server 202 calculates the amount of rebate (cash back) for the sales amount. This amount of rebate may be a predetermined amount, or an amount obtained by multiplying the sales price by a predetermined percentage. In this case, it is preferred that the predetermined percentage is set in consideration of a rule (including a law) of, for example, the upper limit of 2%. On the other hand, determining that the sales amount for a certain period is smaller than a predetermined amount, the product sales management server 202 informs the vending machine that the cash back will not be made." However, the amount of rebate may not be limited as long as the rebate is made in at least one of legal currency and cryptocurrency.

When the amount of rebate is calculated and the cash back can be made, the product sales management server 202 stores the calculated amount of rebate in association with the identification information of the consumer, and responds to the vending machine which is the sender of the identification information (performs a cash back instruction).

In this way, the cash back determination is performed to receive the identification information associated with the amount of rebate from the product sales management server 202, so that the cash back instruction is issued. Then, the vending machine performs a cash back process by a method selected by the consumer.

A cash back method is selected from "cash back in legal currency" and "cash back in cryptocurrency." In this case, a default setting of the cash back method set in the vending machine is the cash back in cryptocurrency. However, the cash back process may be automatically performed by the method in the default setting, as the cash back in cryptocurrency in this embodiment.

Then, upon receiving the cash back instruction from the product sales management server 202, the vending machine informs the consumer that a cash back is available, and can accept an operation of a cash back request including the designation of a cash back method from the consumer.

The vending machine is ready to receive the designation of the cash back method by the consumer and waits until accepting the operation of the cash back request. Here, if the vending machine has not accepted the operation of the cash back request after a predetermined period of time has elapsed, the vending machine may perform the cash back process by the method in the default setting, or cancel the cash back determination not to make a cash back.

With the embodiment, when the operation of the cash back request has not been accepted after a predetermined period of time has elapsed, or when the cash back is automatically performed, "cash back in cryptocurrency" is set as the cash back method. Here, for details, see "when the cash back method determined by accepting the operation of the cash back request is "cash back in cryptocurrency"" described later. As compared to "cash back in legal currency, the cash back in cryptocurrency ensures that the consumer can receive the cash back for the amount of rebate without regard to the operation to select the cash back method and the setting information.

Next, when the vending machine accepts the operation of the cash back request, the vending machine discriminates the cash back method, and, when the cash back method is "cash back in legal currency", the rebate in legal currency is made after the completion of the settlement of the purchase of the product by the settlement mechanism.

On the other hand, when the cash back method discriminated by accepting the operation of the cash back request is "cash back in cryptocurrency", the vending machine informs the product sales management server 202 of the calculated amount of rebate with the identification information of the consumer.

Then, the product management server 202 sends the amount of rebate and the identification information of the consumer to the mining management server 201. The mining management server 201 starts a transaction to remit the amount of rebate in cryptocurrency to the wallet corresponding to the consumer ID to make the rebate.

As described above, the vending machine can sell the product at the discounted sales price based on the mining reward acquired by the mining process, or allows the consumer to get some cash back after the product is sold at the proper sales price without discount.

That is, the vending machine can return the mining reward to the consumer in various ways.

Fig. 3 is a sequence diagram illustrating process transitions in the product selling system including the product selling apparatuses according to the embodiment of the present invention.

The sequence diagram of Fig. 3 illustrates an example for a case where the mining control process performed by the mining management server 201 allows the product selling apparatuses 100 to work together to realize to decentrally performing a single mining process.

Upon detecting the start of a transaction (S301), the mining management server 201 issues a mining process request to each of the product selling apparatuses 100 to decentrally perform the mining process (S302). The product selling apparatus 100 performs the mining process based on the mining process request (S303). The range of this mining process is different from the range of those performed by other product selling apparatuses 100. To be more specific, the condition (range) of a predetermined arithmetic processing performed to output the above-described calculated value is changed for each of the product selling apparatuses 100, so that the mining process can be decentrally performed.

When the calculated value is outputted by performing the predetermined arithmetic processing, the product selling apparatus 100 opens the calculated value to the other miners. When a miner approves the calculated value and the transaction is closed, the mining management server 201 is notified of the result of the mining process performed by the product selling apparatus 100 (S304), and receives the mining reward or acquires the right to receive the mining reward (S305). Then, the mining management server 201 stores the amount of the mining reward (S306), and notifies each of the product selling apparatuses 100 of the amount of the received mining reward (S307).

In response to the notification, each of the product selling apparatuses 100 stores the amount of the mining reward. Then, the determination condition is met, the product selling apparatus 100 determines product sales information based on the amount of the mining reward (S308).

Here, with the embodiment, the product sales information is determined by the product selling apparatus 100, but this is by no means limiting. The product sales information may be determined by the mining management server 201, based on the amount of the mining reward. In this case, the mining management server 201 informs each of the product selling apparatuses 100 of the determined product sales information, and each of the product sales information apparatuses 100 stores the product sales information.

Then, when the product is sold based on the product sales information, each of the product selling apparatuses 100 sends "sold product information" to the product sales management server 202 (S309). By this means, the product sales management server 202 can manage the stock of each of the products (S310).

In this way, the mining process is decentrally performed by each of the product selling apparatuses 100 under the control of the mining management server 201, and therefore it is possible to increase the probability of closing the transaction of the mining process, and consequently increase the probability of acquiring the mining reward. Moreover, it is possible to reduce the processing load on each of the product selling apparatuses 100.

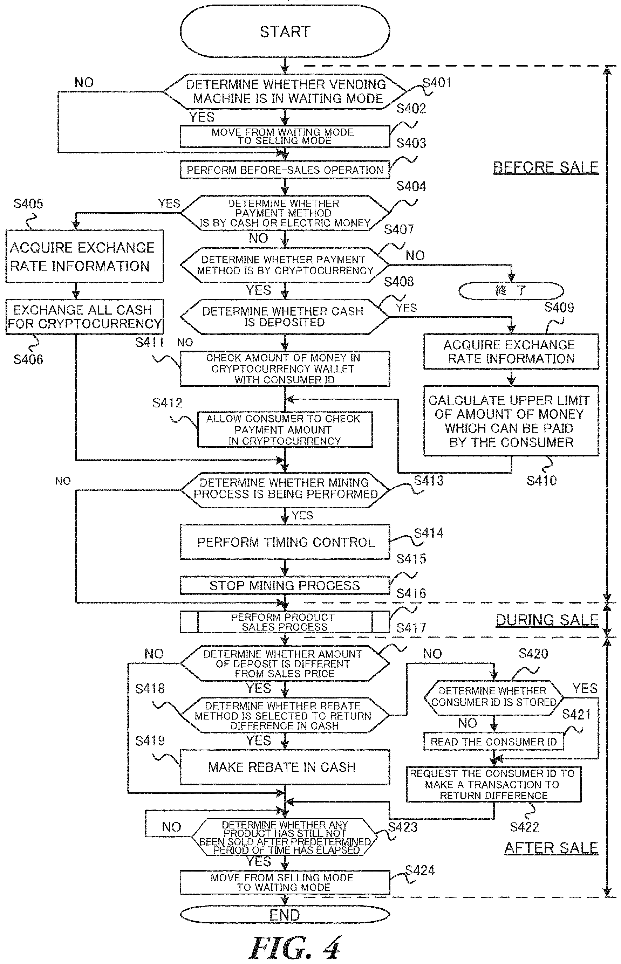

Fig. 4 is a flowchart illustrating a product sales control process performed by the vending machine as an example of the product selling apparatuses according to the embodiment of the present invention.

In Fig. 4, the vending machine starts the product sales control process when the sales starting condition is met. The sales starting condition is met if an operation or action indicating the purchase intention of the consumer or purchaser is recognized, as described above. The operation includes, for example, the deposit of legal currency, the receipt of the selection of the product, and the read of the consumer ID from the electronic money or the cryptocurrency wallet.

Based on the determination that the sales starting condition is met, the vending machine determines whether the vending machine is in "waiting mode" indicating that the vending machine does not sell any product and waits (S401). Then, when determining that the vending machine is not in "waiting mode" but in "selling mode" indicating that the vending machine is selling a product (S401/NO), a before-sales operation described later is performed in S403. That is, an operation of the consumer to purchase the product is accepted in the selling mode in which the vending machine can sell products.

On the other hand, when determining that the vending machine is in the waiting mode (S401/YES), the vending machine moves from the waiting mode to the selling mode that allows the vending machine to sell products (S402).

Next, the vending machine performs the before-sales operation (S403). This before-sales operation is performed to check the payment such as a payment method and an amount of deposit to sell products. That is, "before-sales operation" is performed in different ways depending on the kind of the sales starting condition which has been met.

First, in a case where the sales starting condition is to deposit legal paper currency or hard currency, the before-sales operation is performed to check the amount of deposit, request to select the product (light the selection button for the product), and receive a response to the request such as push of the selection button.

Second, in a case where the sales starting condition is to accept an operation to select the product, the before-sales operation is performed in such a way that a request to deposit cash is performed, or a request to read the consumer ID from the cryptocurrency wallet is performed, and when cash is deposited, the amount of the deposit is checked, or when the consumer ID is read, the amount of money (the upper limit) that can be paid with respect to the consumer ID is checked.

Third, in a case where the sales starting condition is to read the consumer ID from the electric money or the cryptocurrency wallet, the before-sales operation is performed in such a way that the amount of money (the upper limit) that can be paid by the consumer with the consumer ID is checked, and the selection of products is requested and accepted.

Next, the vending machine determines whether the method of paying for the product purchased by the consumer is by "cash" or "electric money" (S404).

When determining that the payment is made by cash or electric money (S404/YES), the vending machine communicates with exchange server 300 as a management device configured to manage the exchange rate or transaction rate used to exchange cash as the legal currency for the cryptocurrency in substitution for the legal currency as the cash, and therefore to acquire information on the exchange rate at the time of selling the product from the exchange server 300 (S405). However, this is by no means limiting, and the information on the exchange rate may be acquired at a predetermined timing and stored in the product selling apparatus 100.

Next, the vending machine converts (exchanges) the total amount of the deposited cash to (with) the cryptocurrency by using the acquired exchange rate (S406). By this means, it is possible to make payment only in cryptocurrency even though the product is purchased in cash, and therefore to improve the efficiency of handling the currency. After the completion of the conversion (exchange) of the total amount of the cash to (with) the cryptocurrency, the vending machine determines whether the mining process is being performed as described later in S413.

In addition, in the step of determining whether the method of paying for the product purchased by the consumer is by cash or electronic money (S404), when determining that the payment method is not by cash or electronic money (S404/NO), the vending machine determines whether the payment method is by cryptocurrency (S407). That is, the vending machine determines whether the consumer ID is read from the cryptocurrency wallet.

When it is determined that the payment method is not by cryptocurrency (S407/NO), the payment method is not by cash, electronic money, and cryptocurrency, and therefore the process ends.

On the other hand, when determining that the payment in cryptocurrency is selected (S407/YES), the vending machine then determiners whether cash is deposited (S408). That is, the vending machine determines whether the payment method is only by cryptocurrency or by a combination of cryptocurrency and cash.

When determining that the cash is deposited (S408/YES) and the payment is made by a combination of cryptocurrency and cash, the vending machine communicates with the exchange server 300 configured to manage the exchange rate used to exchange cash as the legal currency for the cryptocurrency in substitution for the legal currency as the cash to, and therefore acquire information on the exchange rate at the time of selling the product from the exchange server 300 (S409).

Then, the vending machine converts the total amount of the deposited cash to cryptocurrency by using the acquired exchange rate, and sums the converted cryptocurrency and the amount of money in the cryptocurrency wallet corresponding to the consumer ID read in the step S403 to calculate the upper limit of the amount of money which can be paid by the consumer (S410).

Here, as the upper limit of the amount of money for the payment, the total amount of money in the cryptocurrency corresponding to the consumer ID read in the step of S404 may not be set but the amount of money designated based on the relationship with the price of the product on sale may be set.

In this case, the relationship with the price of the product on sale may be obtained by multiplying the highest price of the product by a predetermined magnification ratio (1, 5, 10, and so forth), or by multiplying the unit price of the product by a predetermined magnification ratio (1, 3, 5, and so forth). Otherwise, the upper limit may be any predesignated price.

Then, when determining that cash is not deposited (S408/NO), and the payment is made only by cryptocurrency, the vending machine checks the amount of money in the cryptocurrency wallet corresponding to the consumer ID (S411) .

In this way, when the payment method is designated as the payment only in cryptocurrency or a combination of cash and cryptocurrency, and the amount of money paid for the product is checked (S410 or S411), the vending machine allows the consumer to check the payment amount in cryptocurrency (S412).

By this means, it is possible to make payment only in cryptocurrency in both cases of the payment in legal currency and in cryptocurrency (including a combination with legal currency).

In this way, the payment method and the amount of the payment in cryptocurrency are designated.

Next, the vending machine determines whether the mining process is being performed when the operation indicating the purchase intention of the consumer is performed, which is the basis for the determination that the sales starting condition is met (S413).

When determining that the mining process is not being performed (S413/NO), the vending machine is not performing neither a product sales process nor the mining process, and will perform the product sales process in step 416 described later.

On the other hand, when determining that the mining process is being performed (S413/YES), the vending machine performs timing control to adjust the timing to stop the mining process (S414).

This timing control is performed to control (determine) the timing to stop the mining process performed when the sales starting condition is met. To be more specific, the timing control is performed to adjust the timing to stop the mining process by delaying the time to stop the mining process until the mining process progresses to one of a plurality of check points of the mining process.

As described above, the timing to stop the mining process is controlled, and then the vending machine stops the mining process at this timing (S415).

By this means, the mining process is not stopped immediately after the sales starting condition is met, but is continued until the payment method is designated and the sales price is confirmed. That is, the mining is continued until a preparation for selling the product is completed.

By this means, it is possible to continue the mining process as long as possible, and therefore to increase the probability of acquiring the mining reward during the mining process.

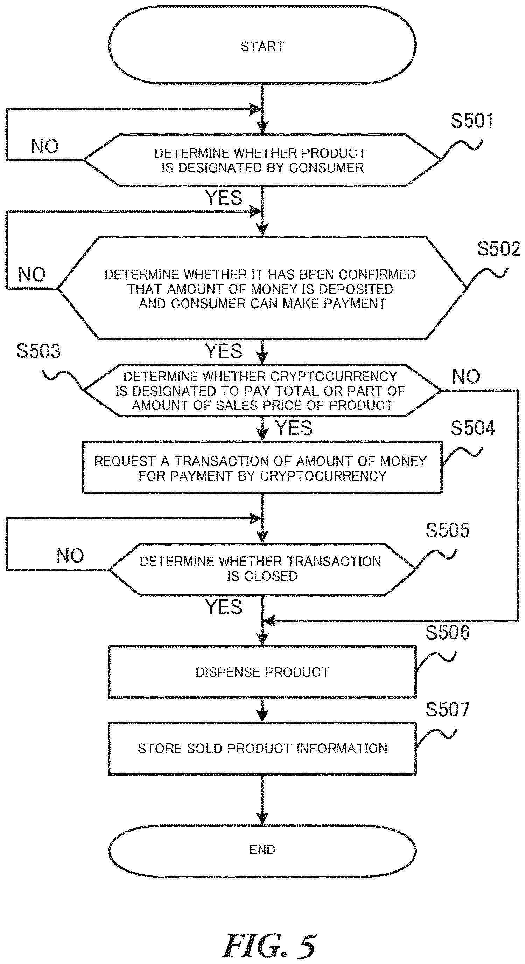

Next, the vending machine performs the product sales process (S416). This product sales process is performed to sell the product designated by the consumer, and details of the product sales process are illustrated in Fig. 5.

In the product sales process, the vending machine dispenses the product, and then determines whether the amount of the cryptocurrency used to pay for the product (the amount of the deposit) is different from the sales price of the product (S417).

The difference means the remaining amount of money belonging to the consumer who has purchased the product. Here, the vending machine manages the total difference in cryptocurrency just after selling the product.

When determining that the amount of the cryptocurrency used to pay for the product (the amount of the deposit) is not different from the sales price of the product (S417/NO), the vending machine completes the money transaction during the product sales process in the step S416, to be more specific, it is determined that the transaction is closed in S505 shown in Fig. 5, the process progresses to step S423.

On the other hand, when determining that the amount of the cryptocurrency used to pay for the product is different from the sales price of the product (S417/YES), the vending machine determines whether a rebate method is selected to return the total or part of the amount of the difference in cash (legal currency) to the consumer(S418). When determining that the rebate method of returning the total or part of the amount of the difference in cash (legal currency) is selected (S418/YES), the vending machine converts (exchanges) the total or part of the difference to (with) cash by using the exchange rate at the time of selling the product, and makes a rebate (S419).

In this case, the consumer may designate the amount of the rebate in cash (legal currency) by operating the vending machine.

Alternatively, the upper limit of the refundable amount in cash may be designated in advance and stored in the vending machine, and the vending machine may make a rebate to the upper limit in cash (legal currency), calculate the difference between the amount of the refunded amount in cash and the amount of the difference (between the deposit and the sales price), and return the difference as the cryptocurrency to the cryptocurrency wallet. Here, when the amount of money designated based on the relationship with the price of the product on sale is designated as the upper limit of the payment amount in the step S410, this upper limit may be the upper limit of the refundable amount in cash.

On the other hand, when determining that the rebate method of returning the total or part of the amount of the difference in cash (legal currency) is not selected (S418/NO), the vending machine determines whether the consumer ID is stored (S420). To be more specific, the vending machine determines whether the payment in cryptocurrency is designated by the consumer at the time of selling the product, and the consumer ID is read from a terminal operated by the consumer. When determining that the consumer ID is not stored in the vending machine

(S420/NO), the vending machine requests the consumer to read the consumer ID and reads the consumer ID (S421). On the other hand, when determining that the consumer ID is stored in the vending machine (S420/YES), the vending machine performs step S422 based on the consumer ID.

By this means, when the consumer ID is read (S421) or when the consumer ID is stored (S420/YES), the vending machine requests a transaction to return the difference to the consumer with the consumer ID (S422), so that the difference is returned.

The process is performed as described above to sell the product and return the difference, and therefore the sale of the product is completed.

Next, the vending machine determines whether any product has still not been sold after a predetermined period of time such as one second, three minutes, and thirty minutes has elapsed after the sale is completed (S423). When determining that the predetermined period of time has not elapsed (S423/NO), the vending machine stays in "selling mode." On the other hand, when determining that any product has still not been sold for over the predetermined period of time (S423/YES), the vending machine moves from "selling mode" to "waiting mode" (S424). This allows the vending machine to perform the mining process.

By this means, while prioritizing the sale of the product, the vending machine continues the mining process as long as possible even though the mining process is being performed at the start of selling the product, and therefore it is possible to increase the probability of acquiring the mining reward. Moreover, the vending machine can exchange the legal currency for the cryptocurrency, for the customer purchasing the product.

Fig. 5 is a flowchart illustrating a product sales process performed by the vending machine as an example of the product selling apparatuses according to the embodiment of the present invention.

Fig. 5 illustrates details of the product sales process illustrated in Fig. 4. The process starts at a ready for selling the product.

In Fig. 5, the vending machine determines whether the product to be sold is designated by the consumer (S501). When determining that the product is not designated (S501/NO), the vending machine prompts the consumer to designate the product, and receives the designation of the product. On the other hand, when determining that the product is designated (S501/YES), the vending machine determines whether it has been confirmed that the amount of money for the designated product is deposited and therefore the consumer can make a payment for the product (S502). To be more specific, in the case of the payment only in cash, the vending machine determines whether the cash for the sales price of the product (cryptocurrency sales price) has been deposited and exchanged for the cryptocurrency. In the case of the payment only in cryptocurrency, the vending machine determines whether the cryptocurrency designated by the consumer which is checked in the step S412 is sufficient for the sales price of the product (cryptocurrency sales price). In addition, in the case of a combination of cash and cryptocurrency, the vending machine determines whether the total amount of the cryptocurrency designated by the consumer which is checked in the step S412 and the cryptocurrency exchanged from the deposited cash is sufficient for the sales price of the product (cryptocurrency sales price).

When determining that it has not been confirmed that the consumer can make a payment for the product (S502/NO), the vending machine requests the consumer to deposit the amount of money necessary for the payment for the product and receives the deposit. On the other hand, when determining that it has been confirmed that the consumer can make a payment for the product (S502/YES), the vending machine further determines whether the deposited amount of money includes cryptocurrency, and the cryptocurrency is designated to pay the total or part of the amount of the sales price of the product (S503).

When the total or part of the amount of money for the product is paid in cryptocurrency (S503/YES), the vending machine requests a transaction for part of the sales price of the designated product which is supposed to be paid in cryptocurrency (S504). Then, the vending machine determines whether the transaction is closed (S505), and when determining that the transaction is not closed (S505/NO), waits until the transaction has been closed. On the other hand, when determining that the transaction is closed (S505/YES), the vending machine dispenses the product (S506).

Then, the vending machine stores the sold product information including the kind of the product, the sales price (the payment price for the product in cryptocurrency at the close of the transaction, or the payment price for the product obtained by summing the amount in cryptocurrency at the close of the transaction and the amount in cash), the payment method, the number of pieces of the products sold (S507).

On the other hand, when determining that the cryptocurrency is not designated to pay the total or part of the amount of the sales price of the product (S503/NO), that is, when determining that the payment is made only by cash, the vending machine progress to the step S506.

Here, the vending machine may sequentially send the stored sold product information to the product sales management server 202.

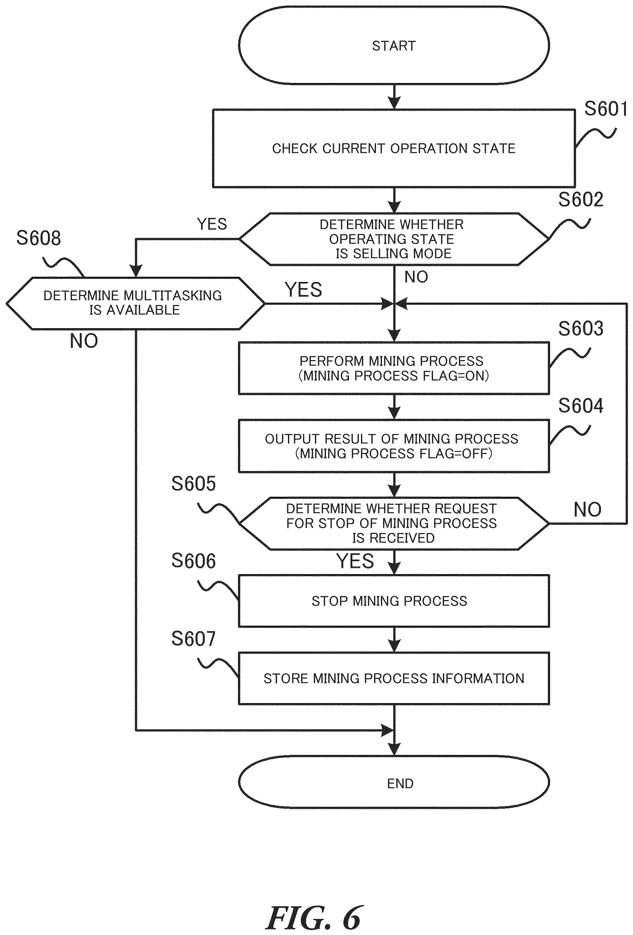

Fig. 6 is a flowchart illustrating a mining control process performed in the vending machine as an example of the product selling apparatuses according to the embodiment of the present invention.

As described above, the mining control process illustrated in Fig. 6 is performed to control the mining process to close the cryptocurrency transaction between any product selling apparatuses. The mining control process is performed when the vending machine does not sell any product, or when the vending machine can perform the mining process while selling a product by multitasking.

In Fig. 6, upon detecting a request for a cryptocurrency transaction between any apparatuses, which is open to the network, the vending machine checks the current operating state (mode) set in the vending machine (S601). By this means, the vending machine determines whether the operating state is "selling mode" in which the vending machine can sell products (S602).

When determining that the operating state is the selling mode (S602/YES), the vending machine determines that multitasking is available (S608). With this multitasking, a thread as the smallest unit of the product sales process including selling products, maintenance, replenishing of products, and settlement of purchase, and the smallest unit of the mining process are performed parallelly or alternately, so that these two processes appear to be performed concurrently. That is, in S608, the vending machine determines whether two processes can be performed concurrently.

When determining that the two processes can be performed concurrently by multitasking (S608/YES), the vending machine moves the step to step S603. On the other hand, when determining that the two processes cannot be performed concurrently by multitasking (S608/NO), the vending machine prioritizes the selling of the product over the mining process, and therefore does not start the mining process and ends the mining control process.

Next, when the vending machine determines that the operating state is not "selling mode" (step S602/NO), that is, when the vending machine in the waiting mode detects a request for a cryptocurrency transaction between any apparatuses, the vending machine performs the mining process (mining process flag=ON) (S603). Then, when the mining process succeeds, the result of the mining process is outputted to the open network. To be more specific, the vending machine opens the result of the mining process on the network by informing other miners performing the mining process on the network of the result (S604).

Then, the vending machine is informed of the result of the mining process from a miner before the mining process is successfully done, and therefore determines whether a request for the stop of the mining process is received (S605). When receiving the result of the mining process from the miner (S605/YES), the vending machine stops the mining process (S606).

This step of stopping the mining process is also performed when the mining process is successfully done and the result of the mining process is outputted in the step S604. In the former case, the step of stopping the mining process is performed to stop the mining process being performed. In the latter case, the step of stopping the mining process is performed to indicate that the vending machine possesses a right to receive the mining reward for the mining process successfully done (S606).

In this way, the mining process is completed, and then the vending machine stores mining process information as history information about the mining process (S607). The mining process information may be stored in the mining management server 201. By this means, the mining management server 201 can store the mining process information about all the product selling apparatuses 100 performing the mining process.

In this way, the vending machine can perform the mining process.

Here, in the process as illustrated in Fig. 6, the vending machine determines whether the multitasking as the step S608 is available, but this is by no means limiting. The mining process may not be performed during the product sales process with or without multitasking.

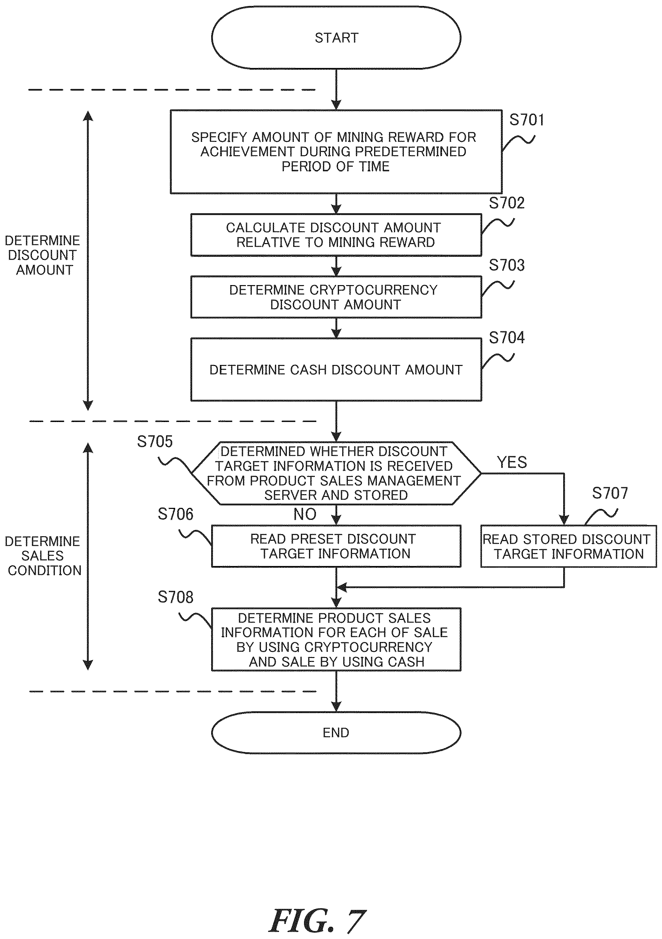

Fig. 7 is a flowchart illustrating a product sales information determination process performed by the vending machine as an example of the product selling apparatuses according to the embodiment of the present invention.

The product sales information determination process illustrated in Fig. 7 is performed to determine information about the products to be sold by the vending machine, such as the price and the quantity of the products, based on the value (amount of money) for the mining reward acquired by the mining process.

In Fig. 7, each of the product selling apparatuses 100 performs "product sales information determination process", but this is by no means limiting. The mining management server 201 having received a request for determining product sales information from each of the product selling apparatuses 100 may perform the product sales information determination process, and each of the product selling apparatuses 100 may receive the determined information about the sale of the product from the mining management server 201 and store the information.

In Fig. 7, the condition to determine the predetermined product sales information is met, the vending machine specifies the amount of the mining reward for the achievement of the mining process during a predetermined period of time (S701). For example, the vending machine specifies the total amount of the mining reward per month, half month, or half year.

Then, the vending machine calculates "discount amount" of the product relative to the specified amount of the mining reward (total amount of the reward) according to a predetermined calculation method (S702). This calculation method is designated in advance depending on the amount of the mining reward.

After the calculation of the discount amount of the product, the vending machine determines the discount amount of the product sold only in cryptocurrency (referred to as "cryptocurrency discount amount") (S703). Also, the vending machine determines the discount amount of the product sold only by cash or by a combination of cryptocurrency and cash (referred to as "cash discount amount") (S704).

The determination and the calculation of the discount amount of the product for the amount of the mining reward illustrated in the step S702, and the determination of the discount amount including the cryptocurrency discount amount and the cash discount amount illustrated in the step S703 and the step S704 are performed based on information listed in the discount determination table illustrated in Fig. 8.

After the determination of the discount amount of the product in the steps S701 to S704, the vending machine determines a sales condition for the product with the discount amount (S705 to S708).

First, the vending machine determines whether "discount target information" about the target products for discount, including the kind of the products, the number of pieces of the products sold, and the sales period has been received from the product sales management server 202 and stored (S705). That is, the vending machine determines whether the discount target is determined centrally by the product sales management server 202.

When determining that the discount target information including the kind of the products, the number of pieces of the products sold has received, and the sales period (S705/YES), the vending machine reads the stored discount target information (S707). On the other hand, when determining that the discount target information has not been received (S705/NO), the vending machine reads preset discount target information (S706).

Then, based on the received discount target information or the preset discount target information, the vending machine determines the product sales information including the sales price (the cryptocurrency sales price and the cash sales price), the kind of the products to be sold, the number of pieces of products to be sold, and the sales period for each of the sale of the product by using cryptocurrency and the sale of the product by using cash (S708).

By this means, the vending machine or the product selling apparatus can determine the product sales information for the amount of the mining reward. With this product sales information determination process, the product sales management server 202 can also determine the product sales information with respect to the amount of the mining reward. Here, with the embodiment, the payment is made exclusively in cryptocurrency, and therefore only the cryptocurrency sales price is used.

Fig. 8 illustrates a discount determination table used in the vending machine as an example of the product selling apparatuses according to the embodiment of the present invention.

The discount determination table illustrated in Fig. 8 lists information used in the steps S702, S703 and S704 in the product sales information determination process illustrated in Fig. 7, and used when the product sales management server 202 performs the product sales information determination process to determine the product sales information with respect to the amount of the mining reward.

In the discount determination table illustrated in Fig. 8, the calculation method of the discount amount for the mining reward, and the determined discount amount (return amount) are associated with the mining reward acquired by the product selling apparatus 100.

The discount determination table includes the following items: "mining reward (MR)"; "basic discount amount (calculation method)"; "discount amount (cash discount amount)"; "discount amount (cryptocurrency discount amount)"; and "remarks."

In the item of "mining reward", the amount ranges of the mining reward are defined as "the minimum unit of currency ≤ mining reward (MR) < amount A", "amount A ≤ MR < amount B", "amount B ≤ MR < amount C" and "amount C ≤ MR."

In the item of "basic discount amount (calculation method)", "the minimum unit of currency to amount A", "amount A + ((amount A to amount B) x designated percentage a) and equal to or smaller than maximum discount amount BB", "amount B + ((amount B to amount C) x designated percentage b) and equal to or smaller than maximum discount amount CC", and "maximum discount amount CC", as the basic discount amount, are associated with the mining reward in the above-described ranges.

In addition, in the item of "discount amount" ("cash discount amount" (combination) and "cryptocurrency discount amount", "basic discount amount" and "basic discount amount", "basic discount amount" and "basic discount amount", "basic discount amount" and "basic discount amount", and "cryptocurrency discount amount" and "basic discount amount" are associated with those basic discount amounts (calculation methods), respectively.

Accordingly, the discount determination table indicates that the discount amount for the mining reward "the minimum unit of currency ≤ mining reward (MR) < amount A" is the mining reward itself. In addition, the discount amount for the mining reward "amount A ≤ MR < amount B" and the discount amount for the mining reward "amount B ≤ MR < amount C" are the amount linking with the mining reward. Moreover, the discount amount for the mining reward "amount C ≤ MR" is a predesignated amount.

By using the discount determination table as illustrated in Fig, 8, it is possible to determine the discount amount based on the mining reward.

Here, amount A to amount C, the maximum discount amount BB, and the maximum discount amount CC illustrated in Fig. 8 indicate values represented in cryptocurrency. The designated percentage a and the designated percentage b are indicated by %. Moreover, the minimum currency unit means the minimum unit available for a transaction.

The above-described embodiment is merely an example of the present invention and is not intended to limit the scope of the invention. Moreover, the embodiment may be appropriately modified or altered without changing the gist of the invention.

### Reference Signs List

- 100: product selling apparatus
- 100a-1: first vending machine
- 100a-2: second vending machine
- 100a-3: third vending machine
- 100b-1: first unmanned store system
- 100b-2: second unmanned store system
- 100c-1: first user terminal
- 100c-2: second user terminal
- 101: detector
- 102: product selling controller
- 103: timer
- 104: sold product information storage unit
- 105: product sales information determination unit
- 106: communication unit
- 107: mining control unit
- 108: mining process unit
- 109: value calculation unit
- 110: mining information storage unit
- 200: management server
- 201: mining management server
- 202: product sales management server
- 203: database
- 300: exchange server

## Claims

1. A product selling apparatus (100) comprising:
a mining process unit (108) configured to perform a mining process to close a transaction in cryptocurrency as substitute for legal currency between any apparatuses (100); and
a selling unit (102) configured to sell a product by making settlement in at least one of the legal currency and the cryptocurrency, wherein:
the mining process unit (108) performs the mining process when the selling unit (102) does not sell the product;
the mining process unit (102) stores a mining reward obtained by the mining process in a storage unit (110) ; and
the selling unit (102) can sell the product, based on product sales information about selling of the product determined depending on the mining reward stored in the storage unit (110).

2. The product selling apparatus (100) according to claim 1, wherein:
when a condition to determine the product sales information is met, a discount amount for the mining reward stored in the storage unit (110) is calculated; and
the selling unit (102) sells the product at a discounted price obtained by subtracting the discount amount from a sales price of the product.

3. The product selling apparatus (100) according to claim 2, wherein the discount amount is determined based on the mining reward stored in the storage unit (110) for one or more products designated in advance.

4. A product selling method performed in an apparatus (100) including:
a mining process unit (108) configured to perform a mining process to close a transaction in cryptocurrency as substitute for legal currency between any apparatuses (100); and
a selling unit (102) configured to sell a product by making settlement in at least one of the legal currency and the cryptocurrency,
the product selling method comprising:
performing the mining process by the mining process unit (108) when the selling unit (102) does not sell the product;
storing a mining reward obtained by the mining process in a storage unit (110); and
selling the product by the selling unit (102), based on product sales information about selling of the product determined depending on the mining reward stored in the storage unit (110).
